# EUROPEAN PATENT APPLICATION

(11) **EP 1 246 430 A2**
(43) Date of publication of application: **02.10.2002**
(21) Application number: 02250608.3
(22) Date of filing: 29.01.2002
(51) Int. Cl.: H04M 1/00, G06F 3/023

(54) **A communication terminal having a predictive text editor application**

(30) Priority: 07.02.2001 GB 0103053
(71) Applicant: Nokia Corporation, 02150 Espoo (FI)
(72) Inventor: Kraft, Christian, DK-2650 Hvidovre (DK); Ostergaard, Christian, 2100 Copenhagen (DK)
(74) Representative: Haws, Helen

(57) **Abstract**

A method of searching for records in a database matching the string of ambiguous key strokes received by the input means, said database includes a plurality of records containing at least two words, and comprises reception of information representing a string of ambiguous key strokes, searching in said records for individual words matching said information representing a string of ambiguous key strokes, and presenting records found by the search engine.

## Description

The invention relates to a communication terminal, e.g. a cellular or cordless phone or a communicator, having a predictive text editor application for entering and editing data.

This kind of predictive text editor may be T9® from Tegic Communications, Inc, or eZiText™ from Zi Corporation. These editors are able to identify a few possible character strings being candidates for inputting into a text based on ambiguous keystrokes.

These kind of editors are widely used in e.g. cellular phones and PDA's. Nokia 3210™ is an example of one phone being equipped with such a predictive text editor.

An object of the invention is to provide a communication terminal with improved usability.

This object is achieved by a search engine for a searching for records in a database matching a string of ambiguous key strokes, said database includes a plurality of records containing at least two words; said search engine comprises input means for receiving information representing a string of ambiguous key strokes, processing means for searching for records containing words matching said information representing a string of ambiguous key strokes, and output means for presenting records containing at least one word matching with the information representing a string of ambiguous key strokes. Hereby the search engine will be able to search for e.g. given names and family names in an electronically phonebook by means of a predictive text editor.

Furthermore the invention relates to a method of searching for records in a database matching the string of ambiguous key strokes received by the input means, said database includes a plurality of records containing at least two words, and comprising receiving information representing a string of ambiguous key strokes, searching in said records for individual words matching said information representing a string of ambiguous key strokes, and presenting records found by the search engine.

According to a further aspect of the invention a communication terminal comprises input means for receiving information representing a string of ambiguous key strokes, a search engine for searching for records in a database matching the string of ambiguous key strokes received by the input means, said database includes a plurality of records containing at least two words, output means for presenting records found by the search engine, and said search engine has processing means for searching for records containing words matching said information representing a string of ambiguous key strokes.

According to a still further aspect of the invention a method of handling acronyms in a predictive text editor in a communication terminal with a display, a keyboard having a plurality of keys associated with several letters each, and processor means controlling the display means in accordance with the operation of the keyboard, comprises generation of a string of ambiguous key strokes, generation of matching words based on an ambiguous string of key strokes by means of a predictive text editor, generation of character strings being possible based on said ambiguous string of key strokes as long as the number of key strokes in the ambiguous string of key strokes does not exceed a predetermined value, combination of said matching words and said character strings into a list of candidates, and presentation of a list of candidates.

Furthermore the invention relates to a communication terminal having a display, a keyboard having a plurality of keys associated with several letters each, and processor means controlling the display means in accordance with the operation of the keyboard. The communication terminal furthermore comprises a predictive text editor program for generating an output containing word matching a received string of ambiguous key strokes, means for generating character strings being possible based on said ambiguous string of key strokes, an text editor application controlled by the processor means communicates with said predictive editor programs for generating matching words based on an ambiguous string of key strokes, said editor application combines said matching words and said character strings into a list of candidates as long as the number of key strokes in the ambiguous string of key strokes does not exceed a predetermined value, and presents the list of candidates for the user.

For a better understanding of the present invention and to understand how the same may be brought into effect reference will now be made, by way of example only, to accompanying drawings, in which: -
Fig. 1 schematically illustrates a preferred embodiment of a hand portable phone according to the invention.
Fig. 2 schematically shows the essential parts of a telephone for communication with e.g. a cellular network.
FIG. 3 shows the major components of the predictive text editor according to a preferred embodiment of the invention.
FIG. 4 shows the architecture of the ambiguity eliminating software according to a preferred embodiment of the invention.
Fig. 5 schematically illustrates schematically the structure of a phonebook database stored in a hand portable phone according to the invention.
Fig. 6 illustrates a display showing the search results found according to the invention.
Fig. 7 shows a flow diagram for the database searching in a portable phone according to the invention.
Fig. 8 shows a flow diagram for the improved predictive text editor in a portable phone according to the invention.
Fig. 9 shows a state diagram for a phone doing phonebook searches according to the invention.
Fig. 10 shows a sequence of display windows illustration illustrating the way of working of a predictive text editor according to the invention.

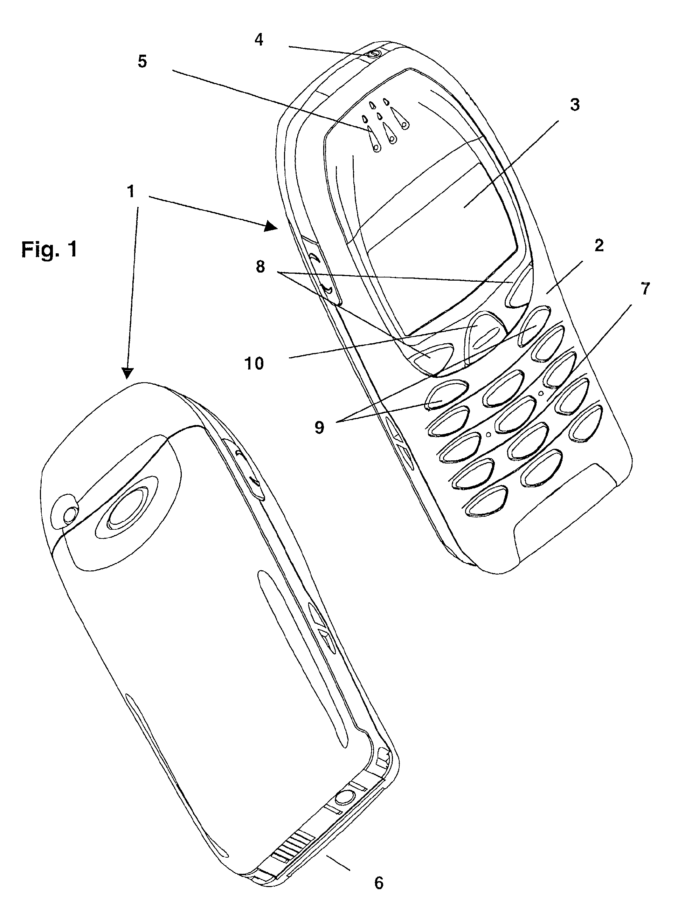

Fig. 1 shows a preferred embodiment of a phone according to the invention, and it will be seen that the phone, which is generally designated by 1, comprises a user interface having a keypad 2, a display 3, an on/off button 4, a speaker 5 (only openings are shown), and a microphone 6 (only openings are shown). The phone 1 according to the preferred embodiment is adapted for communication via a cellular network, but could have been designed for a cordless network as well. The invention could be used in any type of devices having an editor and ambiguish alphanumeric keys.

According to the preferred embodiment the keypad 2 has a first group 7 of keys as alphanumeric keys, two soft keys 8, and a navigation key 10.

Furthermore the keypad includes two call-handling keys 9 for initiating and terminating calls. The present functionality of the soft keys 8 is shown in separate fields in the display 3 just above the keys 8. This key layout is characteristic of e.g. the Nokia 6210™ phone.

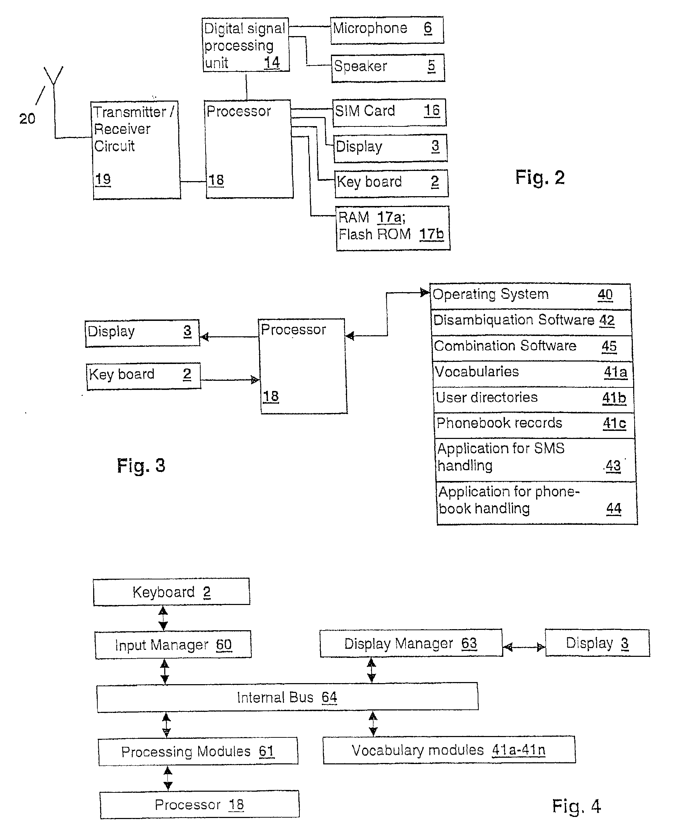

Fig. 2 schematically shows the most important parts of a preferred embodiment of the phone, said parts being essential to the understanding of the invention. A processor 18, which i.a. supports the GSM terminal software, controls the communication with the network via the transmitter/receiver circuit 19 and an antenna 20.

The microphone 6 transforms the user's speech into analogue signals; the signals formed thereby are A/D converted in an A/D converter (not shown) before the speech is encoded in an audio part 14. The encoded speech signal is transferred to the processor 18. The processor 18 also forms the interface to a RAM memory 17a and a Flash ROM memory 17b, a SIM card 16, the display 3 and the keypad 2 (as well as data, power supply, etc.). The audio part 14 speech-decodes the signal, which is transferred from the processor 18 to the earpiece 5 via a D/A converter (not shown).

FIG. 3 shows the major components of the predictive text editor according to the invention. The display 3 and the keyboard 2 establish the man-machine interface. The processor 18 executes instructions and reads data from and writes data in the memory 17b. Software instructions in the memory 17b include an operating system 40, a disambiguation program 42 and its vocabularies 41a-c, and optionally one or more application programs 43, 44.

Target applications programs 43, 44 for the predictive text editor used in a handset include the electronic phone book memory, notepad, messages, calendar, and Internet browsing.

A subprogram identified as Combination Software 45 in fig. 3 generates character strings being possible based on said ambiguous string of keystrokes. The processor 18 controls the text editor application e.g. used in the application 43 for SMS handling. This text editor application receives inputs from the Disambiguation Software 42 (matching words) and the Combination Software 45 (character strings) in response to a number of keystrokes in the ambiguous string of keystrokes.

The text editor application combines said matching words and said character strings into a list of candidates as long as the number of key strokes in the ambiguous string of key strokes does not exceed a predetermined value, and presents the list of candidates for the user.

When the number of keystrokes in the ambiguous string of keystrokes exceeds a predetermined value, the presented list does only include matching words (preferably including a number corresponding to the entered keystrokes.

FIG. 4 shows the architecture of the disambiguating software. Input from a keypad 2 is processed in an input manager 60. Input data is via internal bus means 64 passed to a processing module 61, which keeps a record of the current key sequence until the user has accepted a word based on this sequence by pressing the space key, e.g. being present by short pressing (shorter than e.g. 0.8 sec) the "0" key of alphanumeric keys. When a key stroke has been received by the processing module 61, the current key sequence is communicated via internal bus means 64 to a processor 18 (preferably being the same processor as the processor 18), which forwards the sequence to one or more modules 41 acting as electronic vocabularies.

The vocabulary modules 41a, 41b, 41c, ...41n work in parallel and respond individually if they contain data matching the current keystroke sequence. One vocabulary module 41 a might include a dictionary containing words in a language, e.g. English, defined by the user and used as editing language. The vocabulary modules 41a, 41b, 41c, ...41N often supply a plurality of matching words - either being displayed or available through a selection list.

The processor 18 accumulates a complete list of matching words and character strings, as long as the number of keystrokes in the ambiguous string of keystrokes does not exceed a predetermined value, for the selection list. When the processor 18 has finalised the processing, the processing module 61 transfers the selection list to a display manager 63 and the display 3 via the internal bus means 64.

In the most cases, the disambiguation software will work as an editor server and therefore pass data strings directly to another client or application program 43, 44 running on the processor 18, too. In this case the keypad 2, the input processor 60 and the display manager 63 will be integrated in the application program 43, 44 using the predictive text editor as a server. These applications may include the electronic phone book memory, notepad, messages, calendar, and Internet browsing.

Table 1 shows a preferred key layout of the alphanumeric keys 7. When starting to type a word, the user simply presses the digit key containing the desired letter once.

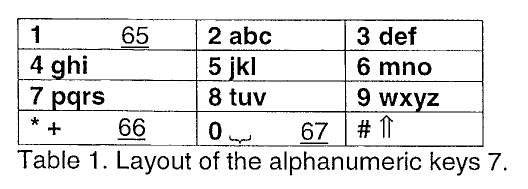

If the user wants to type the word "case", he must press the following keys (once) "2 abc " to insert the "c", "2 abc " to insert the "a", "7 pqrs " to insert the "s", "3 def " to insert the "e", and finally the space key 67 in order to prepare for a new word.

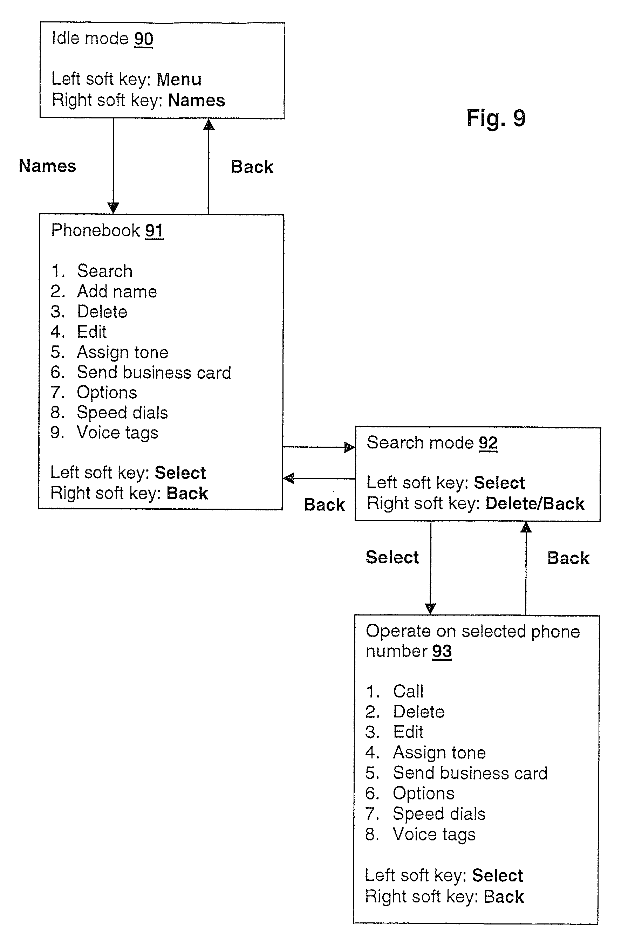

With reference to fig. 9, the user may from idle mode 90 access the phonebook database by pressing the right softkey 8 having the soft key label "Names". The left softkey 8 has the soft key label "Menu".

Hereby the phone accesses the phonebook menu 91 may select one out of a plurality of per se known sub menus. The search engine according to the invention is available in the phonebook search menu by moving a cursor to this item and press the left soft key 8 having soft key label "Select". The left softkey 8 has the soft key label "Back", and pressing this soft key will bring the phone back to idle mode.

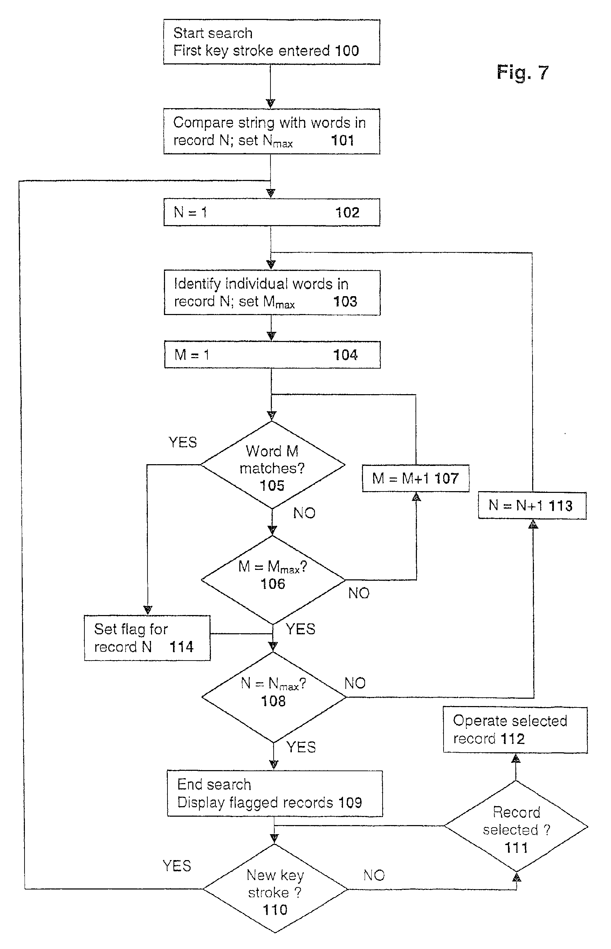

According to the preferred aspect of the invention there is provided a concept for speeding up phonebook look up's. This concept will be explained with reference to fig. 7, and this concept includes a "T9" function for phone books. If the user enters a string of ambiguous key strokes e.g. the character sequence "5-3-3" (JDD), the phone book will respond with matches on this sequence. Furthermore, the phone book search engine should bring out any matches on this string of ambiguous keystrokes in the phone book. This functionality will speed up the look up operation in the phonebook tremendously, and will bring new value to the user.

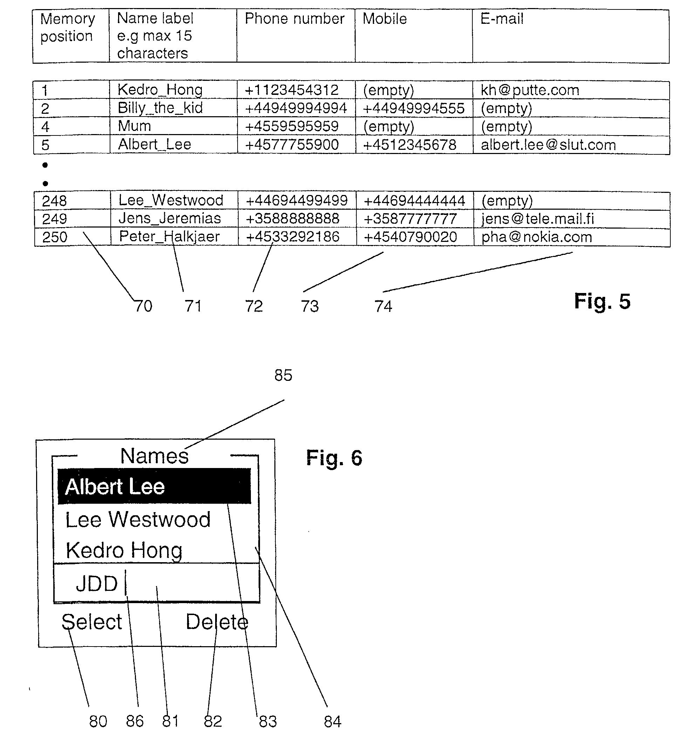

If the user selects an option from the phonebook menu "List Names" and then presses the key sequence 5-3-3. Note, that search is not case sensitive. Then the display shown in fig. 6 shows the matches found for the user. An example of a phonebook format is shown in fig. 5, and according to the preferred embodiment of the invention the phonebook includes 250 records or memory positions. Each record includes a memory position field 70, a name label field 71, a phone number field 72, a mobile number field 73 and an E-mail field 74. As seen the name label field 71 may contain several individual words separated by spaces. Some of the fields may be empty.

The display has an indication 85 informing the user about where in the menu the phone presently is - here "names". Two soft key fields 80 and 82 has the functionalities "Select" and "Delete", respectively. When the user presses the soft key 8 being labelled "select" he may do operations based on the phone numbers or other types of communication identification stored under the name selected. The matching names 84 are displayed and one of these names is highlighted 83. The bar 83 highlighting one of the names is moveable by means of the navigation key 10.

In the display there is a separate field 81 in which the user may inspect and edit the entered key strokes. The string "JDD" informs the user that he has pressed the "5/jkl"-key once and the "3 def"-key twice. A cursor 86 indicates the position where new inputs will be placed or which letter will be deleted.

Fig. 9 shows how the user from idle mode 90 of the phone may either access the menu structure or the phonebook by pressing the desired soft key 8. When pressing the names soft key 8 the phonebook mode 91 is entered. Here the user enters e.g. nine options and the new search concept is found under "search". This search mode 92 is selected by pressing the left search soft key 8, while pressing the right back soft key 8 will bring the phone back in idle mode 90. The search mode 92 has been explained above with reference to fig. 5 and 6. The left select soft key 8 will allow the user to operate on the selected phonebook record, while pressing the delete soft key 8 will delete the character on the left side of the cursor 86. When no characters are present on the left side of the cursor 86, the soft key label of the right soft key 8 will change from "delete" to "back", and pressing the right back soft key 8 will bring the phone back to the phonebook mode 91. The mode 93, where the user is able to operate on the selected record, works as known from the phones that were recently launched by the applicant.

The search method will be described with reference to fig. 7. The search mode 92 is entered and the first keystroke is entered at step 100. At step 101 the database is analysed, and the number of records, Nₘₐₓ, in the database is counted. At step 102 the value N representing the record of the phonebook database presently being analysed is set to 1.

At step 103, the individual words in the record are identified, and the number of words, Mₘₐₓ, in the record is counted. The first record includes two words (Mₘₐₓ= 2) "Kendro" and "Hong". At step 104 M is set to 1 indicating the first word is to be analysed. In step 105 it is evaluated whether the word matches the entered keystrokes. If the word matches a flag is set for the record at step 114, and the phone evaluates at step 108 whether all records have been analysed, and if not the value N is increased with 1 at step 113 and the next record is analysed in step 103.

If the word was deemed not to match the entered key strokes at step 105, the phone evaluates at step 106 whether all words have been analysed, and if not the value M is increased with 1 at step 107 and the next word is analysed in step 105. The phone evaluates at step 108 whether all records have been analysed. If yes the search is stopped, and the flagged results are displayed in step 109. In step 110 it is analysed whether a new keystroke adds a new character to the search string. If so the search is repeated for the updated search string of ambiguous keystrokes including an extra stroke. If not the phone evaluates in step 111 whether one of the displayed records has been selected, and if so the user may operate on the record in step 112, and the search mode 92 is terminated.

According to a further aspect of the invention, the match list is extended with all possible combinations on the pressed keys, at least for the first entered characters of a word. This feature allows the user to select from all possible character combinations possible on a given key sequence also words that are NOT in the T9 standard or user dictionary.

The user can scroll a list of all the matches, and he can insert the desired word. The feature only applies when the word consists of a few letters; allowing this feature for very long words would mean extremely long lists of possible word combinations. However the feature is great for abbreviations which are usually short (2-4 letters).

The feature is good for abbreviations and similar words, which usually are never in the standard dictionary 41a-c. Since most abbreviations are less than four letters (otherwise, the word "abbreviation" does not really make sense), the length of the abbreviation lists will be acceptable. Another reason for this feature is the fact that - after introduction of the T9 editor - it has been observed that the users no longer may know the "traditional" multi-pressing input method used in spell mode. This selecton list method will in many situations be able to replace the spell mode and thereby the multi-press method. The usability of selection lists is obviously better than the multi-press.

Finally, especially for 2-3 letter words, the method may actually be faster and/or require less key presses compared to entering spell mode and typing manually

### Example 1

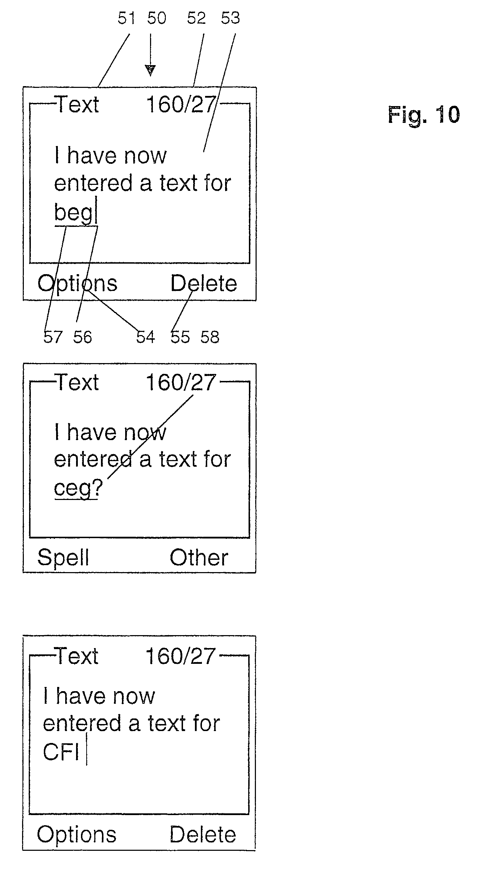

The user presses the "2/abc"-key followed by the "3/def"-key and the "4/ghi"-key. This - in English - will default show the word: "Beg" as indicated in the first display of fig. 10. The display window 50 has a text indication label 51 indicating that the phone presently is in a text editor mode, a position marker 52 indicating that currently 27 characters have been entered and that 160 is the maximum number of characters available in the application - e.g. an SMS message. A text has been entered in to a text area 53, and the character string currently entered is underlined 57 and a cursor 56 marks where the next character will be entered. The two soft keys 8 have soft key labels 54, 55 "Options" and "Delete", respectively.

Pressing the "*/+"-key consecutively will give a list containing the following matching words:
Aeg
Bei
Beh
Cei
Adh
Afg
Afi

The T9 editor dictionary now does not contain any further words, and the left soft-key label 54 changes to "spell" where the user is allowed to enter the desired word by multi-tapping. Furthermore the cursor 56 changes to a question mark 58 indication that no further candidates are available.

The right soft-key 8 will also change in this situation to "Other". Pressing the "Other" soft-key 8 will bring up a menu list containing all other possible word matches. This list may be called the combination list or "remaining words list", since it contains all remaining possible letter combinations of the pressed keys.

In the example with pressing the "2/abc"-key followed by the "3/def"-key and the "4/ghi"-key, the list would look like:
ADG
ADI
AEH
AEI
AFH
BDG
BDH
BDI
BFG
BFH
BFI
CDG
CDH
CDI
CEG
CEH
CFG
CFH
CFI

When a word, e.g. CFI is selected from the list the word is entered into the text and a new word may be entered as shown in the third display window of fig. 10.

Words in this list are preferably ordered alphabetically. Furthermore the words are default written in uppercase. Words containing special characters will always be placed in the end (since abbreviations seldom contain these).
Also words with language specific characters will appear, but - for simplicity - words are not listed containing special characters from other than the selected T9 language the user should be able to "jump" in this list, by pressing the key with the starting letter.

Preferably the words on the other-list are written in UPPER CASE because short acronyms are usually written in uppercase in order to distinguish them from ordinary words.

### Example 2

Another example is if the user presses the "6/mno"-key followed by "7/pqrs"-key. The default word is: "or"
The T9 dictionary also contains:
mr
ms
op
os
mp
ns

The "remaining words list" will then contain:
MQ
NP
NQ
NR
NS
OQ

Since the amount of possible combinations seriously increases above 3 key presses, we may not want to implement the feature for words longer than 3-4 key presses, but preferably the user may set the value by himself. The maximum amount of words depends on what keys have been pressed. Below the maximum amount of words in the list for different word length is listed. Also, the "typical"/"Average" lengths are listed (typical length is the maximum amount of words possible, minus the amount in the standard dictionary.

Words selected from the "Remaining words list" should be added to the user dictionary 41 b, whereby this word will be available from the predictive text editor next time the user is looking for the word.

The feature requires the following:
- generating all possible word matches;
- filtering out the words already known by T9 or user dictionary;
- creating the new view, with the possibility to select and insert a word (this is similar/identical to the current "matches list", just with different words not found by the predictive text editor).

The feature will be present "dynamically", that means in some languages and/or with certain key combinations, the feature may need to be "removed", simply because the list becomes too large.

According to a further improved embodiment the number matching the entered ambiguous string of key strokes is put at the end of matches list. This means that the matches list of example 1 will have the following appearance:
Aeg
Bei
Beh
Cei
Adh
Afg
Afi
234

According to the invention the concept will according to a further embodiment be implemented in a phone having a single softkey 8 by combining the match-list and the other-list into a single common list having the words from the match-list in the top, followed by the matching number and finally the words from the other-list.

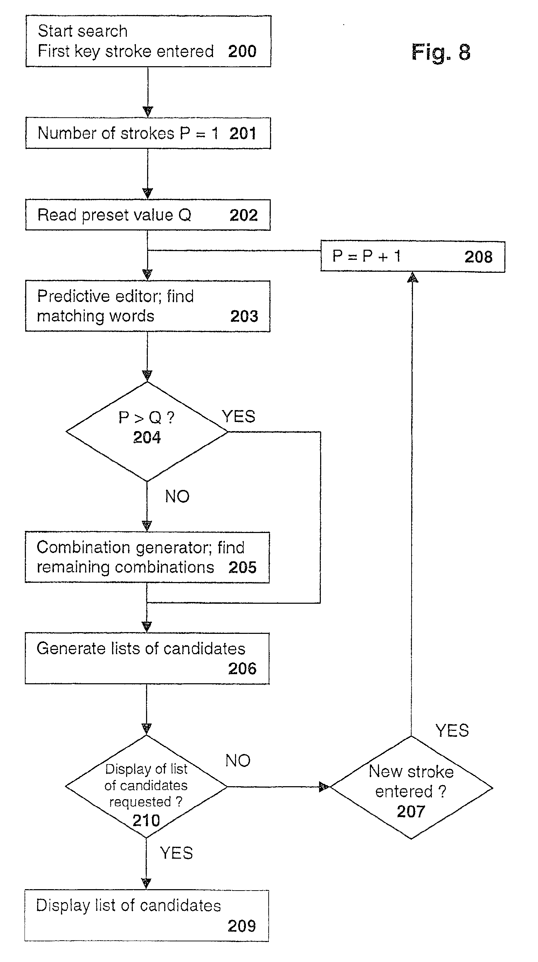

The above mentioned examples may be implemented as described below with reference to fig. 8. The search is started at step 200 when the first keystroke is entered. In step 201, P is set to 1 indicating that only one key has been pressed. The value Q is set by the user, and controls the maximum number of characters in the words in the other-list. This value Q is read in step 202.

At step 2003 the phone starts the predictive editor application, for identifying matching words. At step 204 it is evaluated whether the number of keystrokes exceeds the maximum value set. If not the remaining combinations are found at step 205, too. If the number of keystrokes exceeds the maximum value set the combination generator is not activated. At step 206 the lists of candidates are generated - either as two lists - a matching-list and another-list, or one combined with all candidates included.

At step 210 it is detected whether the lists are requested to be displayed - if yes, this is done at step 209. Otherwise the phone waits for a new key stoke, and when such one is detected at step 207, P is increased with one and the predictive text editor is started once more.

## Claims

1. A method of searching for records in a database matching the string of ambiguous key strokes received by the input means, said database includes a plurality of records containing at least two words, and comprising:
• receiving information representing a string of ambiguous key strokes;
• searching in said records for individual words matching said information representing a string of ambiguous key strokes; and
• presenting records found by the search engine.

2. A search engine for searching for records in a database matching a string of ambiguous key strokes, said database includes a plurality of records containing at least two words; said search engine comprises
• input means for receiving information representing a string of ambiguous key strokes;
• processing means for searching for records containing words matching said information representing a string of ambiguous key strokes; and
• output means for presenting records containing at least one word matching with the information representing a string of ambiguous keystrokes.

3. A search engine according to claim 2, wherein said database includes a plurality of phone number records each containing:
• at least one phone number, E-mail address or another communication terminal ID; and
• a name label including one word or more words being separated by a space.

4. A communication terminal comprising:
• input means for receiving information representing a string of ambiguous key strokes;
• a search engine for searching for records in a database matching the string of ambiguous key strokes received by the input means, said database includes a plurality of records containing at least two words;
• output means for presenting records found by the search engine; and
• said search engine has processing means for searching for records containing words matching said information representing a string of ambiguous key strokes.

5. A communication terminal according to claim 4, wherein said database includes a plurality of phone number records each containing:
• at least one phone number, E-mail address or another communication terminal ID; and
• a name label including one word or more words being separated by a space.

6. A communication terminal according to claim 4, wherein said output means comprises a display for displaying matching records.

7. A communication terminal according to claim 4, wherein said input means comprises a keypad having a plurality of keys associated with several letters each.

8. A communication terminal according to claim 6, wherein said display displays name labels of matching records.

9. A method of handling acronyms in a predictive text editor in a communication terminal with a display, a keyboard having a plurality of keys associated with several letters each, and processor means controlling the display means in accordance with the operation of the keyboard, said method comprising:
• generating a string of ambiguous key strokes;
• generating matching words based on an ambiguous string of key strokes by means of a predictive text editor;
• generating character strings being possible based on said ambiguous string of key strokes as long as the number of key strokes in the ambiguous string of key strokes does not exceed a predetermined value;
• combining said matching words and said character strings into a list of candidates;
• presenting a list of candidates.

10. A method according to claim 9, wherein one of the matching words is inserted as default into an edited text.

11. A method according to claim 10, wherein the matching words are placed in the beginning of the list of candidates, and the character strings being possible are placed in the end of the list of candidates.

12. A communication terminal having a display, a keyboard having a plurality of keys associated with several letters each, and processor means controlling the display means in accordance with the operation of the keyboard, communication terminal furthermore comprises:
• a predictive text editor program for generating an output containing word matching a received string of ambiguous key strokes;
• means for generating character strings being possible based on said ambiguous string of key strokes;
• an editor application controlled by the processor means communicates with said predictive text editor programs for generating matching words based on an ambiguous string of key strokes;
• said text editor application combines said matching words and said character strings into a list of candidates as long as the number of key strokes in the ambiguous string of key strokes does not exceed a predetermined value, and presents the list of candidates for the user.

13. A communication terminal according to claim 12, wherein said predetermined value is user selectable.

14. A communication terminal according to claim 12, wherein said predetermined value is 3.

15. A communication terminal according to claim 12, wherein said list of candidate words includes language dependent words as well as a number corresponding to the numerical value of the ambiguous string of key strokes.

16. A communication terminal according to claim 12, wherein said list of candidate words includes language dependent words as well as a number corresponding to the numerical value of the ambiguous string of key strokes.

17. A communication terminal according to claim 16, wherein said list of candidate words is displayed upon pressing a predetermined key of the keyboard.

18. A communication terminal according to claim 16, wherein the number corresponding to the numerical value of the ambiguous string of keystrokes is suggested as inputted word of the text editor application when no other word matches.
